# EUROPÄISCHE PATENTSCHRIFT

(11) **EP 0 898 942 B1**
(45) Veröffentlichungstag und Bekanntmachung des Hinweises auf die Patenterteilung: **21.05.2003**
(21) Anmeldenummer: 98113520.5
(22) Anmeldetag: 20.07.1998
(51) Int. Cl.: A61C 3/03, A61C 3/02

(54) **Dentalmedizinisches Werkzeug zur Präparation eines Zahns für eine Zahn-Krone**
Dental tool for preparing a tooth for a crown
Outil dentaire destiné à préparer une dent pour une couronne

(30) Priorität: 20.08.1997 DE 19736238
(43) Veröffentlichungstag der Anmeldung: 03.03.1999
(73) Patentinhaber: KALTENBACH & VOIGT GMBH & CO., 88400 Biberach (DE)
(72) Erfinder: Hugo, Burkhard Dr., 97265 Hettstadt (DE); Mössle, Walter, 88441 Mittelbiberach (DE)
(74) Vertreter: Schmidt-Evers, Jürgen, Dipl.-Ing.

(56) Entgegenhaltungen:
- EP-A- 0 646 435
- DE-A- 3 404 550
- DE-A- 19 736 236
- DE-U- 29 609 344
- DE-U- 29 620 686
- US-A- 4 353 696

## Beschreibung

Die Erfindung bezieht sich auf ein dentalmedizinisches Werkzeug zur Präparation eines Zahns für eine Zahn-Krone.

Zur spanabhebenden Präparation eines Zahnes gibt es verschiedene Werkzeuge, deren Wirksamkeit auf unterschiedlichen Funktionsmethoden beruhen. Es sind Feilen mit länglichen und flachen Bearbeitungskörpern bekannt geworden, die auf einer Breitseite eine abrasive Arbeitsfläche aufweisen und bei einer oszillierenden Bewegung, deren Amplituden in der Längsrichtung der Feile gerichtet sind, für eine Oberflächenbearbeitung des Zahns geeignet sind. Die Größe der Bewegungsamplituden ist beträchtlich und beträgt im allgemeinen mehrere Millimeter. Eine Kavität im Zahn kann mit einer solchen Feile nicht eingearbeitet werden. Dies gilt insbesondere für eine Kavität, die eine quer zur Einarbeitungsrichtung verlaufende Grundfläche aufweist. Bezüglich einer solchen Grundfläche ist die Feile nicht nur unwirksam, sondern die Grundfläche steht der Bewegung der Feile entgegen, so daß es zu einer Beschädigung und zum Bruch der Feile kommen würde, wenn sie zur Ausarbeitung einer solchen Kavität benutzt werden würde.

In der WO 96/14024 ist ein Werkzeug beschrieben, dessen abrasiver Bearbeitungsabschnitt seitlich und stirnseitig wirksam und geeignet ist, bei oszillierendem Antrieb im Sinne einer Vibration, die dem Werkzeug durch ein dentales Handstück übertragen wird, eine seitliche Kavität im Zahn auszuarbeiten. Bei dieser bekannten Ausgestaltung ist der Bearbeitungsabschnitt ein Bearbeitungskopf, der bezüglich des Werkzeugschaftes verdickt ist und dessen Querschnittsform zu seinem freien Ende hin konvergiert. Auf der dem seitlichen Bearbeitungsabschnitt gegenüberliegenden Seite weist das Werkzeug eine glatte Fläche auf. Hierdurch ist das bekannte Werkzeug geeignet, eine Kavität im approximalen Bereich des Zahns einzuarbeiten. Bei diesem Einarbeitungsvorgang wird der Bearbeitungsabschnitt vorzugsweise von okklusal nach zervikal eingesenkt. Dabei kann die Kavität durch ein Rotationswerkzeug bereits vorgearbeitet sein, oder sie kann auch mit dem Bearbeitungsabschnitt ohne Vorarbeitung ausgearbeitet werden. Hierbei bleibt der benachbarte Zahn unbeeinträchtigt, da die dem Bearbeitungsabschnitt gegenüberliegende glatte Fläche den benachbarten Zahn nicht beschädigt. Die Abrasivität der wirksamen Arbeitsflächen des Bearbeitungsabschnitts wird durch einen Besatz von aneinanderliegenden kleinen Körnern aus hartem Material, vorzugsweise aus Diamant, geschaffen. Im Funktionsbetrieb erweisen sich die kleinen harten Körner als eine Vielzahl von Schneiden, wobei die jeweils vorhandenen Arbeitsflächen im wesentlichen ganzflächig wirksam sind.

Die Amplituden der Oszillationsbewegungen des Bearbeitungsabschnitts im Funktionsbetrieb können durch räumliche kreisförmige oder ellipsenförmige Bewegungen im Sinne der Vibration ausgeführt werden. Um beim Herausziehen des Werkzeugs aus der Kavität ein Klemmen zu vermeiden, weist der Bearbeitungsabschnitt eine zu seinem freien Ende hin konvergente Querschnittsform auf.

Bei dieser bekannten Ausgestaltung weist das Werkzeug an seiner dem Zahn zugewandten Seite, an seinen dazu querverlaufenden Längsseiten und an seiner Stirnseite die Arbeitsfläche auf, die sich im Bereich dieser Seiten durchgehend erstreckt.

Da bei einem vorliegenden Werkzeug wegen des kurzhubigen Vibrationsantriebs die Präparationsleistung zum einen verhältnismäßig gering ist und zum anderen bei einer Kronenpräparation verhältnismäßig viel Zahnsubstanz ausgearbeitet werden muß, ist es vorteilhaft, eine Kronenpräparation mit einem herkömmlichen rotierenden Werkzeug so vorzubereiten, daß ein Zahnstumpf mit einem seitlichen Freiraum entsteht, der mit der aufzusetzenden Krone ausgefüllt wird.

Die Patentschrift US4353696A beschreibt ein dentales Vibrationswerkzeug zur Zahnpräparation, das einen länglichen Werkzeugschaft mit einem Bearbeitungsabschnitt an seinem einen Ende umfasst. Dieser Bearbeitungsabschnitt weist einen Funktionsbereich, der sich über eine glatte Seitenfläche und die dem Schaft gegenüberliegende Stirnfläche erstreckt, und eine abrasive Arbeitsfläche auf.

Es ist im übrigen bekannt, daß der Kantenbereich zwischen der Mantelfläche eines Zahns und der in die Mantelfläche auslaufenden Fläche des Randbereichs der Kronenpräparation empfindlich ist und zum Ausbrechen neigt. Dies ist darauf zurückzuführen, daß der Zahnschmelz eine Prismenstruktur hat, wobei die Prismen von denkbaren Strahlen begrenzt sind, die vom Zahnzentrum ausgehen. Der Zahn läßt sich dabei als ein abgestumpftes Ei oder eine abgestumpfte Kugel vorstellen, das bzw. die im Zahnfleisch versenkt angeordnet ist. Zur Vermeidung des Ausbrechens des Zahnschmelzes im Bereich der vorbeschriebenen Kante ist bereits vorgeschlagen worden, die Kante durch die Anbringung einer Fase zu brechen und diese Fase mit einer am freien Rand der Krone angeordneten Randsteg so auszufüllen, daß die freie Seitenfläche des Zahns und die freie Seitenfläche der Krone stufenlos ineinander übergehen.

Der Erfindung liegt die Aufgabe zugrunde, ein Werkzeug der eingangs angegebenen Art so auszugestalten, daß eine formgerechte Kronenpräparation auf einfache Weise erreichbar ist.

Diese Aufgabe wird durch die Merkmale des Anspruchs 1 gelöst.

Dadurch, daß die Seitenfläche und/oder die Stirnfläche wenigstens einen Flächenabschnitt aufweist, der glatt ist, weist das Werkzeug eine durch die glatte Fläche gebildete Führungsfläche auf, die seine Führung durch Anlage entweder an der vorgefertigten Seitenfläche des Zahnstumpfs oder an der Stufenfläche des Freiraums ermöglicht. Hierdurch läßt sich am Zahn in einfacher Weise und auch formgerecht präparieren, so daß eine leistungsfähige Präparation bei guter Passform erreicht wird. Dies begünstigt die Sanierung des Zahns, weil die Lebensdauer einer Krone von einer guten Passform der Präparation abhängig ist.

Es ist vorteilhaft, den abrasiven bzw. abtragenden Arbeitsflächenbereich des Werkzeugs in die Oberfläche des Bearbeitungsabschnitts einzulassen, vorzugsweise so in eine Vertiefung anzuordnen, daß die Arbeitsfläche stufenlos in den jeweils benachbarten Flächenbereich übergehen.

Eine vorteilhafte Ausführungsform der Erfindung besteht darin, daß eine Führungsfläche sowohl seitlich als auch stirnseitig vorhanden ist, so daß zwei quer zueinander stehende Führungsflächen vorgegeben sind, an denen das Werkzeug stabil geführt ist.

Der Präparationsfreiraum an einem Zahn für eine Krone wird möglichst weitgehend an den Randverlauf des Zahnfleisches angepaßt. Hierdurch ergibt sich ein kurvenförmiger Verlauf, der den Freiraum begrenzenden Stufenfläche, wobei letztere in den meisten Fällen im seitlichen Bereich konkav und im approximalen Bereich konvex verläuft.

Der Erfindung liegt im weiteren die Aufgabe zugrunde, ein vorliegendes Werkzeug so auszugestalten, daß eine Anpassung des die Krone aufnehmenden Freiraums am Zahn an den Verlauf des Zahnfleisches möglich ist.

Diese Aufgabe wird durch die Merkmale des abhängigen Anspruchs 3 gelöst.

Bei dieser bevorzugten Ausgestaltung ist die freie Stirnfläche des Werkzeugs quer zu der dem Zahn zugewandten Seitenflächen konvex geformt. Hierdurch ist das Werkzeug geeignet, sowohl einen konkaven als auch einen konvexen Verlauf der Stufenfläche auszuarbeiten, die den Kronen-Freiraum begrenzt.

Wenn ein vorliegendes Werkzeug daran gehindert wird, seine Oszillationsbewegung auszuführen, besteht die Gefahr, daß es sich aufgrund ergebender Stoßeffekte überlastet und beschädigt werden kann und abbrechen kann, insbesondere dann, wenn das Werkzeug gleichzeitig unter lateralen Belastungen steht.

Der Erfindung liegt im weiteren die Aufgabe zugrunde, die Gefahr einer solchen Beschädigung des Werkzeugs zu vermeiden oder zumindest zu verringern.

Diese Aufgabe wird durch die Merkmale des abhängigen Anspruchs 10 gelöst. Bei dieser Ausgestaltung weist das Werkzeug ein oberhalb seines Bearbeitungsabschnitts, angeordnetes Dämpfungsmittel auf, das die Belastung des Werkzeugs dämpft und damit das Werkzeug schützt. Das Dämpfüngsmittel überträgt die Antriebskraft im wesentlichen unverändert, jedoch erfolgt die Kraftübertragung nachgiebig, so daß dann wenn das Werkzeug daran gehindert ist, seine Oszillationsbewegung auszuführen die Antriebskraftund Belastungsspitzen abgedämpft werden. Das Dämpfungselement kann radial und/oder axial wirksam sein.

Mit dem erfindungsgemäßen Werkzeug und dem erfindungsgemäßen Handstück lassen sich sowohl Teilkronen, die sich nur über einen Umfangsabschnitt des Zahns erstrecken, als auch Vollkronen vorteilhaft präparieren und anbringen. In beiden Fällen bedarf es während der Vorschubbewegung in der Umfangsrichtung des Zahns einer Drehung des Werkzeugs um dessen Längsachse, so daß der Funktionsbereich des Bearbeitungsabschnitts dem Zahn immer zugewandt ist. Um dies zu erreichen werden mehrere erfindungsgemäße Ausgestaltungen vorgeschlagen. Zum einen kann dies dadurch erreicht werden, daß das Werkzeug aus zwei aus seiner Längsrichtung hintereinander angeordneten Teilen besteht, die in einem Drehlager oder Drehgelenk frei drehbar miteinander verbunden sind. Zum anderen kann das Werkzeug drehbar im Handstück gelagert sein. Diese Ausgestaltungen ermöglicht eine kontinuierliche Anpassung des Bearbeitungsabschnitts an die jeweilige Winkelposition des Zahns, ohne daß die Behandlungsperson eine unterschiedliche Drehstellung des Werkzeugs bezüglich des Handstücks einstellen muß.

Um während der abrasiven Bearbeitung den Bearbeitungsabschnitt des Werkzeugs gezielt in einer bestimmten Drehstellung belassen zu können, ist es vorteilhaft, im Bereich des vorbeschriebenen Drehlagers bzw. Drehgelenks eine Feststellvorrichtung anzuordnen, mit der die freie Drehbarkeit des Bearbeitungsabschnitts sperrbar ist, so daß letzterer in seiner jeweiligen Drehstellung verbleibt. Dabei ist es vorteilhaft, die Feststellvorrichtung so auszubilden, daß sie selbsttätig in Funktion tritt, wenn der Bearbeitungsabschnitt lateral und/oder axial unter der während der Präparation entstehenden Belastungskraft verstellt wird. Die Feststellvorrichtung eignet sich insbesondere in Verbindung mit einem Schwenkgelenk, das eine pendelnde Lateralbewegung des Werkzeugs gegen seitliche elastische Rückstellkräfte ermöglicht, so daß es durch die Rückstellkräfte mittenzentriert ist. Bei einer solchen Ausgestaltung läßt sich die Feststellvorrichtung durch die unter der Belastungskraft ausweichende Bewegung des Bearbeitungsabschnitts selbsttätig einschalten und wieder ausschalten. Die pendelnd gelagerte Schwenkbarkeit des Werkzeugs oder Bearbeitungsabschnitts gegen eine ihn zentrierende Rückstellkraft ermöglicht zum einen ein Ausweichen des Bearbeitungsabschnitts und zum anderen ein Schwenken bzw. Kippen des Handstücks während der Bearbeitung. Auf den vorbeschriebenen Ausgestaltungskomplex beziehen sich die Ansprüche 19 und folgende.

In weiteren Unteransprüchen sind Merkmale enthalten, die die Bauform und Führung des Werkzeugs verbessern, eine Verletzung benachbarter Zähne im approximalen Bereich des zu behandelnden Zahns vermeiden und eine vorteilhafte Passform der Präparation gewährleisten.

Nachfolgend werden die Erfindung und weitere durch sie erzielbare Vorteile anhand von vorteilhaften Ausgestaltungen und Zeichnungen näher erläutert. Es zeigt
- Fig. 1: zwei erfindungsgemäße Werkzeuge in unterschiedlicher Ausgestaltung in der Seitenansicht mit einem zugehörigen Handstück und einem mit dem jeweiligen Werkzeug zu präparierenden Zahn;
- Fig. 2: das in Fig. 1 linke Werkzeug in etwas vergrößerter Darstellung;
- Fig. 3: den Schnitt III-III in Fig. 1;
- Fig. 4: den Teilschnitt IV-IV in Fig. 1;
- Fig. 5: einen präparierten Zahnstumpf von einer Seite her gesehen mit einem Werkzeug in unterschiedlichen Arbeitsstellungen;
- Fig. 6: einen präparierten Zahnstumpf von der Seite her gesehen mit einem abgewandelten Werkzeug in unterschiedlichen Arbeitsstellungen;
- Fig. 7: einen präparierten Zahnstumpf vom Zwischenzahnbereich her gesehen mit einem sich in Arbeitsstellung befindlichen Werkzeug;
- Fig. 8 bis 10: jeweils einen Bearbeitungsabschnitt eines Werkzeugs in abgewandelter Ausgestaltung in der Seitenansicht;
- Fig. 11: ein erfindungsgemäßes Werkzeug in abgewandelter Ausgestaltung in der Seitenansicht;
- Fig. 12: ein Ausführungsbeispiel nach Fig. 11 im axialen Schnitt;
- Fig. 13: das Ausführungsbeispiel nach Fig. 12 in weiter abgewandelter Ausgestaltung.

Das allgemein mit 1 bezeichnete Werkzeug ist von länglicher Bauform und besteht aus einem stabförmigen Werkzeugschaft 2 und einem sich an dessen einen Ende anschließenden Bearbeitungsabschnitt 3, der zumindest in einer Querabmessung kopfförmig verdickt ist, wodurch eine vorderseitige Breitseite 4a, eine rückseitige Breitseite 4b und zwei sich quer dazu erstreckende Schmalseiten 4c, 4d gegeben sind, die sich im wesentlichen längs der Mittelachse 5 des Werkzeugs 1 erstrecken.

Die an der vorderseitigen Breitseite 4a angeordnete Seitenfläche des Bearbeitungsabschnitts 3 ist eine breite, sich aufwärts im wesentlichen gerade erstreckende und gegebenenfalls ebene Seitenfläche 7, die sich parallel zur Mittelachse 5 des Werkzeugschaftes 2 bzw. des Bearbeitungsabschnitts 3 erstreckt oder mit dieser einen spitzen Winkel W von etwa 3 bis 8°, insbesondere etwa 5° einschließen kann, der zum freien Stirnende hin geschlossen ist. Dabei können die breite Seitenfläche 7 und die zugehörige Mantelfläche des Werkzeugschaftes 2 stumpfwinklig ineinander übergehen, oder die breite Seitenfläche 7 kann seitlich nach außen versetzt sein, so daß dazwischen eine Stufenfläche 8 vorhanden ist. Die schmalseitigen Seitenflächen 4c, 4d erstrecken sich im wesentlichen parallel zur Mittelachse 5, wobei sie in der Querrichtung ebenfalls parallel zueinander angeordnet sein können oder einen spitzen Winkel W1 einschließen können, der etwa 10 bis 20° betragen kann und radial nach außen offen ist.

An der Stirnseite 6 weist der Bearbeitungsabschnitt 3 einen ersten Stirnflächenabschnitt 9 auf, der sich quer zur Mittelachse 5 erstreckt, vorzugsweise gerundet in die breite Seitenfläche 7 übergeht und mit der Mittelachse 5 einen Winkel W2 von etwa 90° bis 100° vorzugsweise einen leicht stumpfen Winkel von etwa 95° einschließt, der zum Werkzeugschaft 2 hin offen ist.

An den Stirnflächenabschnitt 9 schließt sich seitlich eine Fasenbearbeitungsfläche 11 an, die einen stumpfen Winkel W3 mit der Mittelachse 5 einschließt, der größer ist, als der Winkel W2 und etwa 120° bis 135°, beträgt.

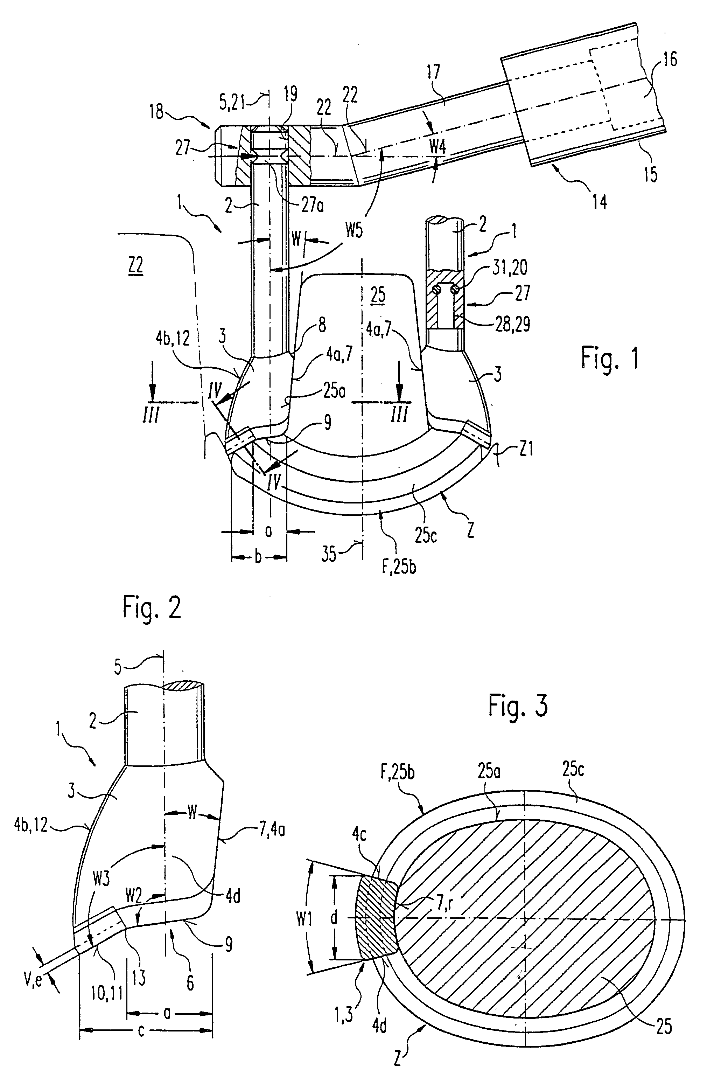

Die rückseitige breite Seitenfläche 12 kann sich - in der Seitenansicht gemäß Fig. 1 und 2 gesehen - konvex oder gerade erstrecken, wobei sie die Fasenbearbeitungsfläche 11 spitzwinklig schneidet. Diese Scheitelkante ist vorzugsweise gebrochen oder gerundet.

Die Breite a des Stirnflächenabschnitts 9 beträgt etwa 0,4 bis 0,6 mm, vorzugsweise etwa 0,5 mm, und entspricht etwa der Hälfte einer üblichen Wanddicke b von etwa 0,8 bis 1,2 mm einer Krone. Die Breite c der Stirnseite 6 ist gleich oder etwas größer bemessen als die Wanddicke b. Die sich quer dazu erstreckende Breite d des Bearbeitungsabschnittes 3 ist etwa gleich oder größer bemessen, als die Querschnittsabmessung des kreisrunden Werkzeugschaftes 2 und beträgt etwa 2 mm bis 2,5 oder bis 3 mm, vorzugsweise etwa 2,2 mm.

Die Fasenbearbeitungsfläche 11 ist mit einer Vielzahl von Schneiden besetzt, die bei einer vorzugsweise parallel zur Scheitellinie 13 zwischen der Fasenbearbeitungsfläche 11 und dem Stirnflächenabschnitt 9 verlaufenden oszillierenden Bewegungen geeignet ist, am Zahn Z Material spanabhebend abzutragen. Insbesondere dann, wenn die Amplituden einer oszillierenden Bewegung verhältnismäßig klein sind, können die Amplituden auch quer zur Scheitellinie 13 oder in unterschiedliche Richtungen, d.h. räumlich, gerichtet sein. Für eine abrasive Arbeitsfläche 10 eignen sich eine Vielzahl, vorzugsweise dicht nebeneinander auf der Fasenbearbeitungsfläche 11 befestigte harte Körner. Hierzu kann die Fasenbearbeitungsfläche 11 in an sich bekannter Weise körnig diamantisiert sein.

Da die abrasiven Körner auf der Fasenbearbeitungsfläche 11 eine Schicht mit einer gewissen Dicke bilden, die an ihrem dem Stirnflächenabschnitt 9 angrenzenden Rand eine kleine Stufe in der Stirnseite 6 bildet, ist es vorteilhaft, entweder die Arbeitsfläche 10 stufenförmig um eine der Dicke der Körner entsprechenden Dicke e zu vertiefen oder die Körner im Bereich der Scheitellinie13 gegen den Stirnflächenabschnitt 9 auslaufen zu lassen, wodurch eine Stufe am Rand der abrasiven Beschichtung verhindert wird. Bei der Herstellung des Werkzeugs 1 wird die vorgefertigte Vertiefung V abrasiven Schicht ausgefüllt.

Zur Halterung und Führung sowie zum Antrieb des Werkzeugs 1 ist das Handstück 14 vorgesehen, das eine längliche runde Griffhülse 15 in Form eines Gehäuses aufweist, in der ein, z.B. elektrisch oder pneumatisch betriebener Schwingungserzeuger 16 angeordnet ist, der seine Schwingungsenergie auf einen im Handstück 14 gelagerten und sein vorderes Ende überragenden Handstückschaft 17 übertragt, in dessen vorderen Endbereich eine Befestigungsvorrichtung 18 mit einem Einsteckloch 19 für den Werkzeugschaft 2 angeordnet ist, dessen Mittelachse 21 sich quer, insbesondere etwa rechtwinklig zur Mittelachse 22 des Handstückschaftes 17 erstreckt, so daß das Werkzeug 5 vom Handstückschaft 17 seitlich absteht. Ein lösbares Arretierelement ist in Fig. 1 durch einen Pfeil angedeutet, z.B. eine Schraube.

Unter Berücksichtigung der beengten Raumverhältnisse im Mundraum eines Patienten ist es vorteilhaft, wenn der vordere Endbereich des Handstückschaftes 17 etwas zur dem Werkzeug 1 abgewandten Seite hin abgebogen oder abgewinkelt ist, vorzugsweise um einen Winkel W4 von etwa 5 bis 15°, insbesondere etwa 10°, so daß die Mittelachse 5 des Werkzeugs 1 mit der Mittelachse des Handstücks 14 einen stumpfen Winkel W5 von etwa 100° einschließen.

Für die Präparierung des in Fig. 1 angedeuteten Zahnes Z wird dieser an seiner Mantelfläche vorzugsweise mit einem rotierenden Bearbeitungswerkzeug zu einem Zahnstumpf 25 spanabhebend präpariert, dessen Mantelfläche mit 25a und dessen Stufenfläche mit 25b bezeichnet sind. Der zwischen den beiden zuletzt genannten Flächen eingeschlossene Winkel entspricht in etwa dem Winkel W2 zwischen der breiten Seitenfläche 7 und dem Stirnflächenabschnitt 9. Zur spanabhebenden Einarbeitung der Fasenfläche 25c wird das Werkzeug 1 mit dem Handstück 14 in den Ausarbeitungsfreiraum F für die Krone so eingesetzt, daß die breite Seitenfläche 7 an der Mantelfläche 25a anliegt, und dann wird das Werkzeug 1 nach Einschaltung des Schwingungserzeugers 16 und Anlage der Fasenbearbeitungsfläche 11 am äußeren Rand der Stufenfläche 25b in Umfangsrichtung des Zahnstumpfes 25 bewegt, wobei die Fasenbearbeitungsfläche 11 bzw. Arbeitsfläche 10 den Randbereich der Stufenfläche 25b spanabhebend abträgt und die Fasenfläche 25c am Zahn Z einarbeitet. Bei der Bewegung in Umfangsrichtung erhält das Werkzeug 1 eine gute Führung durch die Anlage der breiten Seitenfläche 7 an der Mantelfläche 25a und des Stirnflächenabschnitts 9 an der Stufenfläche 25b die somit Führungsflächen sind. Im Rahmen der Erfindung ist eine gute Führung jedoch auch bereits dann gewährleistet, wenn nur die breite Seitenfläche 7 an der Mantelfläche 25a anliegt. Im Rahmen der Erfindung ist es deshalb möglich, daß die abrasive Arbeitsfläche 10 sich nicht nur im Bereich der Fasenbearbeitungsfläche 11 sondern auch wenigstens über einen Teil des Stirnflächenabschnitts 9 oder bis in den Basisbereich der breiten Seitenfläche 7 erstreckt. Bei einer solchen Ausgestaltung ist das Werkzeug 1 auch dazu geeignet, die Stufenfläche 25b spanabhebend zu bearbeiten und somit eine gute Passform auch an der Stufenfläche 25b zu erzielen.

Wie am besten aus Fig. 3 erkennbar ist, ist das Werkzeug 1 bei seinem Vorschub in der Umfangsrichtung des Zahnes Z um seine Mittelachse 5 zu drehen, damit die Anlage der breiten Seitenfläche 7 an der Mantelfläche 25a gewährleistet bleibt. Dies ist mit einem erheblichen ergonomischen Aufwand verbunden, weil insbesondere unter Berücksichtung der engen Raumverhältnisse im Mundraum ein Drehen des Werkzeugs 1 um seine Mittelachse 5 nur begrenzt möglich ist. Die Handhabung wird dann wesentlich erleichtert, wenn entsprechend der Ausgestaltung gemäß Fig. 1 rechts der Bearbeitungsabschnitt 3 bezüglich des Werkzeugschaftes 2 um die Mittelachse 5 drehbar gelagert ist. Bei einer solchen Ausgestaltung erfolgt eine selbsttätige Drehverstellung des Bearbeitungsabschnitts 3 dergestalt, daß seine breite Seitenfläche 7 immer an der Mantelfläche 25a anliegt und beim Vorschieben des Werkzeugs1 in Umfangsrichtung der Bearbeitungsabschnitt 3 durch den Anlagedruck an der Mantelfläche 25a selbsttätig gedreht wird. Bei der Ausgestaltung gemäß Fig 1 ist ein solches Drehgelenk 27 entweder zwischen dem Bearbeitungsabschnitt 3 und dem Werkzeugschaft 2 oder im Bereich des Werkzeugschaftes 2 angeordnet. Das Drehgelenk 27 kann durch einen runden Gelenkzapfen 28 und einen ihn mit geringem Bewegungsspiel aufnehmendes Gelenkloch 29 gebildet sein, die in der zusammengesteckten Position durch eine Verrrastungsvorrichtung 20 gegen ein axiales Auseinanderziehen gesichert sind, z.B. durch einen elastisch ein- und ausrastbaren Arretierring 31, der in einer Ringnut im Steckzapfen 28 oder im Gelenkloch 29 sitzt und in eine entsprechende Gegennut am jeweils anderen Teil elastisch einzurasten vermag. Anstelle eines Arretierrings kann auch ein radial ein- und ausfederbarer Arretierzapfen vorgesehen sein, der an seinem freien Ende eine Ausführungsschräge aufweist oder kugelförmig gerundet ist. Bei der Ausgestaltung nach Fig. 1 ist der Gelenkzapfen 28 am Bearbeitungsabschnitt 3 angeordnet und das Gelenkloch 29 im Werkzeugschaft 2 angeordnet.

Das Drehgelenk 27 kann jedoch auch dadurch gebildet sein, daß das Werkzeug 1 in einem Drehgelenk 27 im Handstück 14 bzw. im Handstückschaft 17 drehbar gelagert ist. Ein solches Drehgelenk 27 läßt sich dadurch ausbilden, daß der Werkzeugschaft 2 mit wenigstens einem Lager, z.B. im Aufnahmeloch 19, um die Mittelachse 5 drehbar gelagert jedoch axial fixiert ist, z.B. mit der Schraube (Pfeil), die in eine Ringnut 27a im Werkzeugschaft 2 einfaßt, oder mit einer Verrastungsvorrichtung (nicht dargestellt).

Wenn ein Drehgelenk 27 vorhanden ist, kann das Werkzeug 1 während seines Vorschiebens in Umfangsrichtung des Zahnstumpfes 25 ständig mit seiner breiten Seite 7 in Anlage mit der Mantelfläche 25a gehalten werden, wobei der Bearbeitungsabschnitt 3 oder das Werkzeug 1 insgesamt dem runden Verlauf der Mantelfläche 25a ständig folgt und dabei gedreht wird. Dabei kann das Handstück 14 in seiner in den Mundraum des Patienten hineinragenden Normalstellung verbleiben. Die breite Anlage- bzw. Seitenfläche 7 ist vorzugsweise in Anpassung an die Mantelfläche 25a zylinder- oder kegelabschnittförmig gerundet, wodurch die Anlage verbessert und stabilisiert wird. Der Rundungsradius r kann etwa 5 bis 10 mm betragen. Entsprechend gerundet kann auch die rückseitige breite Seitenfläche 12 sein.

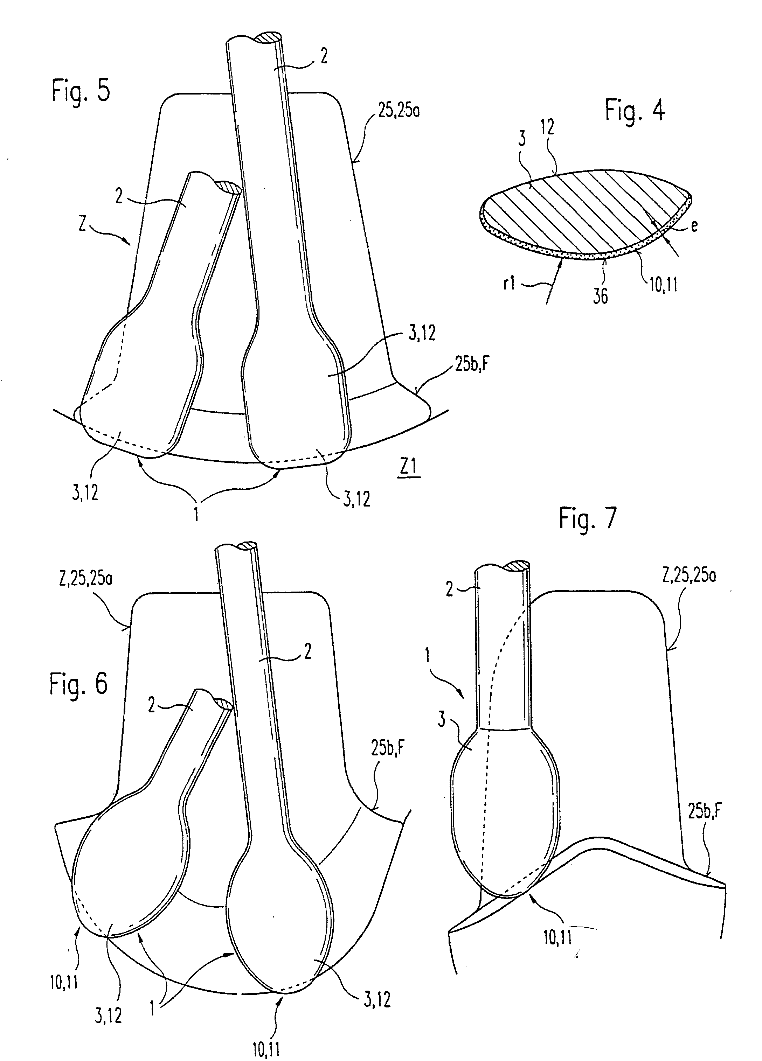

Die Stufenfläche 25b verläuft bezüglich der Mittelachse 35 des Zahns Z nicht rotationssymetrisch, sondern in Anpassung an das Zahnfleisch Z1 im seitlichen Bereich des Zahns Z und im approximalen Bereich kurvenförmig, wie es Fig. 1 und 5 bis 7 zeigen. Die Stirnseite 6, d.h., der Stirnflächenabschnitt 9 und die Fasenbearbeitungsfläche 11 bzw. Arbeitsfläche 10 sind deshalb - im Schrägschnitt IV-IV in Fig. 1 gesehen - konvex geformt, insbesondere gerundet, wobei die Rundung vorzugsweise an die maximale Krümmung der Stufenfläche 25b gemäß Fig. 1 angepaßt ist, so daß vorzugsweise in der bezüglich der Mittelachse 35 normalen Stellung des Werkzeugs der Kurvenverlauf der Stufenfläche 25b gemäß Fig. 1 ausgearbeitet werden kann. Die mit 36 bezeichnete konvexe Form kann jedoch auch etwas flacher als die Krümmung des Kurvenverlaufs ausgebildet sein, da das Werkzeug 1 auch in etwas schrägen Arbeitsstellungen spanabhebend arbeiten kann, wie es in Fig. 5 links beispielhaft dargestellt ist. Bei einer gemäß Fig. 4 gerundeten Form beträgt der Radius r1 etwa .4 bis 5, insbesondere 3 mm. Dabei kann der Bearbeitungsabschnitt 3 mit Blickrichtung auf seine rückseitige breite Seitenfläche 12 im Sinne eines parallel verlaufenden Spatels oder im Sinne eines zu seinem freien Ende hin konvergent verlaufenden Spatels geformt sein, wobei die Ecken am freien Ende gerundet sind (s. Fig. 5) oder das konvergent zulaufende Ende gerundet ist (Fig. 6). Die Ausgestaltung gemäß Fig. 5 eignet sich für eine geringe konkave Krümmung der Kurvenform des Zahnfleisches Z1, während sich die mit winkelförmigen Flanken oder gerundet konvergente Endform nach Fig. 6 für starke konkave Krümmungen eignet. Dies gilt auch für konvexe Krümmungen des Zahnfleisches Z1 gemäß Fig. 7.

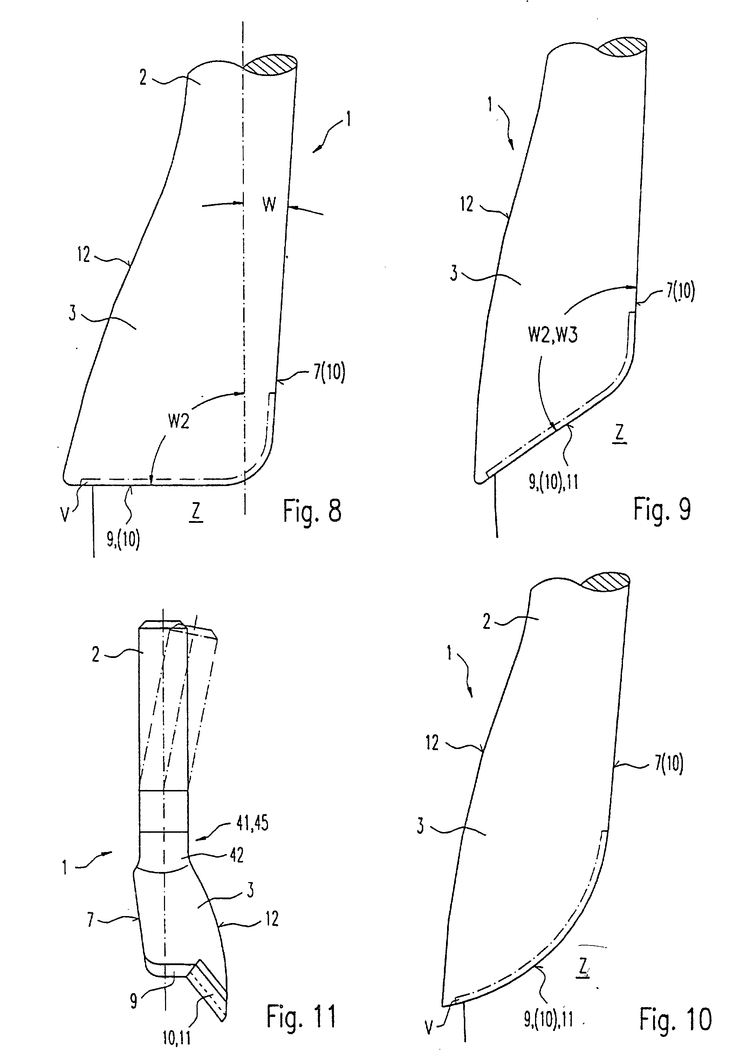

Wie die Fig. 8 und 9 zeigen, können der Stirnflächenabschnitt 9 und die Fasenbearbeitungsfläche 11 auch in einer geraden Linie verlaufen, wobei der zwischen ihnen und der Mittelachse 5 des Werkzeugs 1 eingeschlossene Winkel W2 bzw. W3 etwa 90° bis 135° betragen kann. Dabei kann sich die abrasive Arbeitsfläche 10 entsprechend der Ausgestaltung gemäß Fig. 2 sich nur bis zum Stirnflächenabschnitt 9 oder auch über einen Teilbereich oder den gesamten Bereich des Stirnflächenabschnitts 9 oder auch bis in den zugehörigen Endbereich der breiten Seitenfläche 7 erstrecken. Dabei kann in diesen Ausgestaltungsfällen die Vertiefung sich in Richtung auf die breite Seitenfläche 7 entsprechend weit erstrecken, wobei sie sich bis über einen zugewandten Teil der breiten Seitenfläche 7 erstrecken kann, wie es dargestellt ist. Rückseitig ist es vorteilhaft, die Vertiefung V in einem kleinen Abstand vor der rückseitigen breiten Seitenfläche 12 enden zu lassen. Hierdurch entfällt eine problematische scharfe Kante an der zugehörigen Ecke des Bearbeitungsabschnitts 3, die hinsichtlich Verletzungsmöglichkeiten problematisch wäre.

Das Ausführungsbeispiel gemäß Fig. 10 unterscheidet sich von den beiden vorbeschriebenen Ausführungsbeispielen gem. Fig. 8 und 9 dadurch, daß die durch den Stirnflächenabschnitt 9 und die Fasenbearbeitungsfläche 11 gebildete Stufe des Bearbeitungsabschnitts 3 im wesentlichen durchgehend gerundet ist, vorzugsweise im Sinne einer gleichmäßigen Rundung in der Seitenansicht gemäß Fig. 10 gesehen. Mit einem solchen Bearbeitungsabschnitt 3 wird eine gerundete Stufenfläche 25b im Sinne einer Hohlkehle erzeugt. Auch bei dieser Ausgestaltung kann sich die Vertiefung V nur im aussenseitigen freien Endbereich der Hohlkehle oder auch über einen Teilbereich unter dem gesamten Bereich des Stirnflächenabschnitts 9 oder auch über einen zugewandten Teil der breiten Seitenfläche 7 erstrecken. Dabei kann die gesamte Stirnfläche 6 oder ihr äußerer Teil eine abrasive Arbeitsfläche 10 sein.

Es ist im Rahmen der Erfindung auch möglich, daß die abrasive Arbeitsfläche 10 sich über den gesamten Bereich der breiten Seitenfläche 7 erstreckt, so daß auch die Mantelfläche 25a abrasiv bearbeitet werden kann. Dabei ist es im weiteren möglich, daß die breite Seitenfläche 7 sich über die gesamte Höhe des Zahnstumpfes 25 erstreckt. Der Funktionsbereich B des Bearbeitungskopfes 3 erstreckt sich somit hinsichtlich einer Abstützung und Führung und seiner abrasiven Wirkung über einen Teil oder die gesamte Seitenfläche 7 und über einen Teil oder über die gesamte Stirnfläche 6. Bei allen Ausgestaltungen läßt sich mit dem erfindungsgemäßen Werkzeug 1 teilweise oder vollständig eine Feinpräparation des Kronen-Freiraums F formgerecht bei hoher Präzision erzielen.

Die übrigen Flächen des Bearbeitungsabschnitts 3, z.B. die Seitenflächen 4c, 4d außerhalb der konvexen Form 36 und insbesondere die rückseitige Seitenfläche 12 sind glatt ausgebildet. Durch letzteres wird eine Beschädigung des benachbarten Zahns Z2 bei einer Stellung des Werkzeugs 1 im approximalen Bereich vermieden.

Für das Werkzeug 1 besteht die Gefahr, daß dann, wenn das Werkzeug 1 daran gehindert wird, eine Oszillationsbewegung auszuführen, es aufgrund eines aus der Oszillationsbewegung resultierenden Stoßeffektes überlastet und beschädigt werden kann. Es ist deshalb vorteilhaft, bei allen Ausgestaltungen des Werkzeugs 1 ein Dämpfungsmittel 41 im Bereich des Werkzeugschaftes 2 vorzusehen.

Bei der Ausgestaltung nach Fig. 11 befindet sich das Dämpfungsmittel 41 im Bereich des Werkzeugschaftes 2, vorzugsweise nahe oder am Bearbeitungsabschnitt 3 oder im Übergangsbereich zwischen dem Werkzeugschaft 2 und dem Bearbeitungsabschnitt 3.

Das Dämpfungsmittel 41 dämpft die aus dem Oszillationsantrieb resultierenden und auf das Werkzeug 1 wirksamen Belastungsspitzen, wodurch das Werkzeug vor Überlastungen geschützt ist und die Gefahr einer Beschädigung oder eines Bruchs des Werkzeugs 1 vermieden oder wesentlich reduziert ist. Dabei kann das Dämpfungsmittel 41 bezüglich seitlich und/oder axial gerichteten Kräften bzw. Stößen wirksam sein. Das Dämpfungsmittel 41 ermöglicht eine Relativbewegung zwischen den Abschnitten des Werkzeugs 1, zwischen denen es angeordnet ist, wodurch der Bearbeitungsabschnitt 3 aufgrund der Flexibilität des Dämpfungsmittels 91 nachgiebig gehalten ist. Das Dämpfungsmittel 41 überträgt die Antriebskraft zwar unverändert, jedoch folgt die Kraftübertragung nachgiebig, so daß dann, wenn das Werkzeug 1 daran gehindert ist, seine Oszillationsbewegung auszuführen, die Antriebskraftspitzen abgedämpft werden. Dies ist dann der Fall, wenn die Amplituden der Oszillationsbewegung quer zur Arbeitsfläche 10 gerichtet sind.

Bei der Ausgestaltung nach Fig. 10 ist das Dämpfungselement 41 durch ein Zwischenglied 42 aus elastisch verformbaren Material, z.B. Kunststoff oder Gummi gebildet, das zwischen zwei Werkzeugschaftteilen oder zwischen dem Werkzeugschaft 2 und dem Bearbeitungsabschnitt 3 angeordnet ist und mit diesen Teilen fest verbunden ist, z.B. durch Kleben. Ein solches Dämpfungselement 41 ist auch in Umfangsrichtung wirksam.

Im Rahmen der Erfindung ist es auch möglich, daß Dämpfungselement 41 anstelle einer elastisch verformbaren Scheibe durch eine andere Feder, z.B. eine Druckfeder mit Wendeln oder eine Gasfeder, zu bilden.

Das Dämpfungsmittel 41 ermöglicht somit sowohl eine axiale Relativbewegung des Bearbeitungsabschnitts 3 und/oder eine Biegung, wobei die Elastizität des Dämpfungsmittels 41 so groß bemessen ist, daß eine Mindestdruckkraft oder ein Mindestbiegemoment nicht unterschritten wird, das für die abrasive Bearbeitung erforderlich ist. Aufgrund der Biegsamkeit im Bereich des Dämpfungsmittels 41 ist ein allseitig wirksames Gelenk 45 geschaffen, das eine seitliche Biegung des Bearbeitungsabschnitts 3 relativ zum Werkzeugschaft 2 ermöglicht, wie es Fig. 11 andeutungsweise zeigt. Auch bei einer solchen Biegung wird das vorgenannte Mindestdrehmoment nicht unterschritten, so daß die für die abrasive Bearbeitung erforderliche Andruckkraft trotz Biegung übertragen werden kann. Das Gelenk 45 bildet somit ein Pendelgelenk, in dem der Bearbeitungsabschnitt 3 aufgrund der der elastischen Biegsamkeit mittenzentriert ist.

Aufgrund der Biegsamkeit ist die Handhabung während der Präparation erleichtert, da der Bearbeitungsabschnitt 3 in seiner am Zahnstumpf 25 anliegenden und geführten Position verbleiben kann, obwohl der Werkzeugschaft 2 bei der Handhabung auszubiegen vermag.

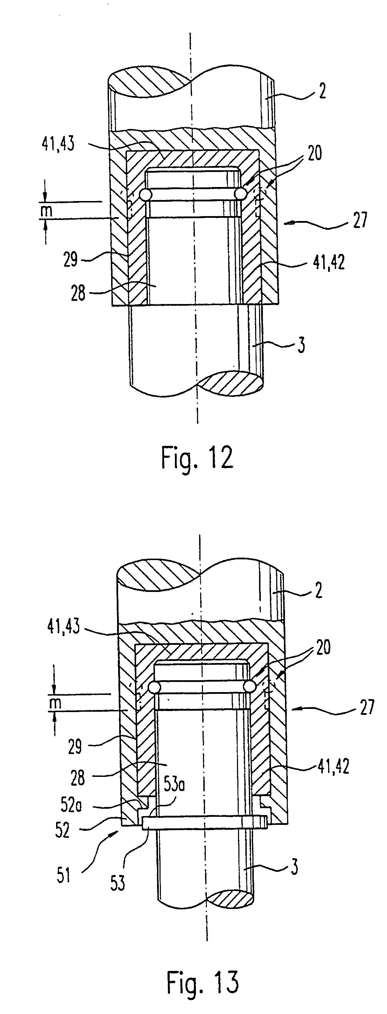

Bei der Ausgestaltung gem. Fig. 12, bei der gleiche oder vergleichbare Teile mit gleichen Bezugszeichen versehen sind, ist das Dämpfungsmittel 41 in das Drehgelenk 27 integriert. Dabei kann auch hier das Dämpfungsmittel 41 so ausgebildet sein, daß es seitliche und/oder axiale Stöße bzw. Belastungskräfte zu dämpfen vermag und dabei auch eine seitliche Biege- bzw. Knickbewegung des Bearbeitungsabschnitts 3 zuläßt. Wesentliches Teil des Dämpfungsmittels 41 ist eine Hülse 42 und/oder Scheibe 43 jeweils aus elastischem Material, wie z.B. Kunststoff oder Gummi, die Hülse 42 ist zwischen der Mantelfläche des Gelenkzapfens 28 und der Mantelfläche des Gelenklochs 29 angeordnet, wobei sie fest auf dem Gelenkzapfen 28 oder fest an der Wandung des Gelenklochs 29 befestigt sein kann, z.B. angeklebt sein kann. Die Scheibe 43 ist zwischen dem Gelenkzapfen 28 und dem Grund des Gelenklochs 29 angeordnet, wobei auch die Scheibe 43 an der Stirnseite des Gelenkzapfens 28 oder an der Grundfläche des Gelenklochs 29 befestigt, z.B. angeklebt sein kann. Im Falle des Vorhandenseins der Hülse 42 vermag das Dämpfungsmittel 41 seitliche Belastungskräfte bzw. Stöße zu dämpfen, wobei der Bearbeitungsabschnitt 3 seitlich auszuweichen vermag. Beim Vorhandensein einer Scheibe 43 vermag das Dämpfungsmittel 41 axiale Belastungskräfte bzw. Stöße zu dämpfen, wobei der Bearbeitungsabschnitt 3 axial auszuweichen vermag.

Wenn die Hülse 42 Teil des Gelenkzapfens 28 ist, ist die Verrastungsvorrichtung 20 im Bereich der Wandung des Gelenklochs 29 und der Außenmantelfläche der Hülse 42 angeordnet. Wenn die Hülse 42 im Gelenkloch 29 befestigt ist, ist die Verrastungsvorrichutng 20 im Bereich der Innenmantelfläche der Hülse 42 und der Mantelfläche des Gelenkzapfens 28 angeordnet.

Wenn die Scheibe 43 vorhanden ist, ist die Verrastungsvorrichtung 20 so auszubilden, daß die möglichen axialen Kontraktions- und Streckbewegungen des Werkzeugs 1 zuläßt. Bei der vorliegenden Ausgestaltung wird dies dadurch erreicht, daß die Innen- oder Außenausnehmung für das Verrastungselement um ein solches Maß m größer bemessen ist, als das zugehörige Querschnittsmaß des Verrastungselements, das eine Relativverschiebung zwischen den beiden jeweils verrastbaren Teilen möglich ist.

Vorzugsweise sind sowohl eine Hülse 42 als auch eine Scheibe 43 vorhanden, wobei das Dämpfungsmittel 41 vorzugsweise durch eine Kappe gebildet ist, wie es Fig. 12 zeigt und die fest im Gelenkloch 29 oder auf dem Gelenkzapfen 28 angeordnet sein kann.

Bei der Ausgestaltung nach Fig. 13, ist dem Drehgelenk 27 eine Feststellvorrichtung 51 zugeordnet, die die freie Drehbarkeit aufhebt, wenn die seitliche Belastung auf das Werkzeug 1 eine vorbestimmte Kraft übersteigt. Diese Ausgestaltung ist insbesondere bei einer Kronenpräparation von Vorteil. Wenn das Werkzeug 1 bei einer Präparation nicht durch Drehen ausweichen soll, dann läßt sich das Drehgelenk 27 durch Einschaltung der Feststellvorrichtung 51 verstarren, so daß der Bearbeitungsabschnitt 3 nicht ausweichen kann und in der jeweiligen Drehstellung spanabhebende Arbeiten verrichten kann. Dies wird dadurch erreicht, daß im Bereich des Drehgelenks 27 in einem radialen Abstand f um den Bearbeitungsabschnitt 3 herum ein Feststellring 52 am Werkzeugschaft 2 oder Werkzeugschaftteil, hier am Rand des Gelenklochs 29, angeordnet ist, der bei einer seitlichen Bewegung bzw. Schwenkung des Bearbeitungsabschnitts 3 mit einem gegenüberliegenden zweiten Feststellring 53 am Bearbeitungsabschnitt 3 kraftschlüssig aufgrund von Reibung oder formschlüssig aufgrund eines Zahneingriffs in Eingriff kommt und dadurch den Bearbeitungsabschnitt 3 am Drehen hindert. Die nicht dargestellten Zähne erstrecken sich vorzugsweise parallel zur Mittelachse 5, so daß beim Vorhandensein auch eines axial wirksamen Dämpfungsmittels, hier der Scheibe 43 bzw. der Kappe der Bearbeitungsabschnitt 3 während des Zahneingriffs eine axiale Bewegung ausführen kann.

Soll z.B. an eine bestimmte Bearbeitungsstelle des Zahns der Bearbeitungabschnitt 3 gezielt eingesetzt werden und forciert wirksam sein, dann wird während der Bearbeitung der seitliche Druck auf den Bearbeitungsabschnitt 3 so stark vergrößert, daß die Feststellringe 51, 52, die vorzugsweise einteilig angeformt sind, in Eingriff geraten und die Drehbarkeit des Bearbeitungsabschnitts 3 aufheben. Nach einer Verringerung der seitlichen Belastung kehrt der Bearbeitungsabschnitt 3 aufgrund der Rückstellkraft der Hülse 42 selbsttätig in seine mittenzentrierte Stellung zurück, in der er unter Ausnutzung seiner freien Drehbarkeit zur abrasiven Bearbeitung benutzt werden kann.

In solchen Fällen, in denen das Dämpfungselement 41 nur axial wirksam ist, sind zwei Feststellringe 52, 53 in einem axialen Abstand e voneinander so anzuordnen, daß sie bei einer axialen Bewegung des Bearbeitungsabschnitts 3 in Eingriff geraten. Bei der Ausgestaltung gem. Fig. 13 sind zwei Feststellringpaare 52, 53 bzw. 52a, 53a entsprechend winkelförmig ausgebildet, so daß das Ringpaar 52, 53 bei einer seitlichen Bewegung und das Ringpaar 52a, 53a bei einer axialen Bewegung in Eingriff kommen.

Die Verrastungsvorrichtung 20 ermöglicht es, ein zugehöriges Handstück handhabungsfreundlich und schnell mit einem Werkzeug 1 zu bestücken oder ein Werkzeug 1 auszutauschen. Es ist deshalb vorteilhaft, mehrere Werkzeuge 1 als Set vorzusehen, die sich voneinander unterscheiden, für unterschiedliche Präparationsarbeiten eigenen und wahlweise bestückbar sind. Vorzugsweise handelt es sich hierbei um Werkzeuge 1, die sich hinsichtlich ihrer Präparationsform und/oder Abtragsfähigkeit unterscheiden. Es ist vorteilhaft, mehrere Werkzeuge 1 vorzusehen, die eine grobe und feine oder grobe, mittlere und feine abrasive Arbeitsfläche aufweisen, und somit Grobund Feinbearbeitungen ermöglichen, und sich hinsichtlich ihrer Größe und/oder Form voneinander unterscheiden können.

Alle Ausführungsformen eignen sich für vom Schwingungserzeuger auf den Bearbeitungsabschnitt 3 übertragene kurzhubige Schwingungen im Sinne einer Vibration mit einer vorzugsweise im Schall- oder Ultraschallbereich liegenden Frequenz, wobei die Schwingungen bzw. Amplituden quer oder längs linear oder auch räumlich gerichtet sein können. Beim vorliegenden Ausführungsbeispiel weist der Schwingantrieb eine Bewegungsfrequenz von etwa 4 bis 8 kHz, insbesondere etwa 6 kHz, auf, wobei sich im Bereich des Bearbeitungsabschnitts 3 eine Amplitude der räumlichen Bewegungen von etwa 0,05 mm bis 0,25 mm oder bis 0,5 mm, insbesondere von etwa 0,1 mm ergibt.

## Patentansprüche

1. Dentalmedizinisches Werkzeug (1) zur Präparation eines Zahnes (Z) für eine Zahn-Krone, bestehend aus einem länglichen Werkzeugschaft (2), der an seinem einen Ende mit einem Bearbeitungsabschnitt (3) verbunden ist, der eine sich längs und/oder quer zur Mittelachse (5) des Werkzeugschaftes (2) erstreckende abrasive Arbeitsfläche (10) aufweist, und dessen Funktionsbereich (B) sich über eine Seitenfläche (7) und die dem Werkzeugschaft (2) gegenüberliegende Stirnfläche (6) des Bearbeitungsabschnitts (3) erstreckt, wobei die Seitenfläche (7) auf einem Längsabschnitt oder insgesamt glatt ist und die Stirnfläche (6) nur auf einem der Seitenfläche (7) abgewandten Bereich einen abrasiven Arbeitsflächenabschnitt (11) aufweist.

2. Dentalmedizinisches Werkzeug nach Anspruch 1,
**dadurch gekennzeichnet,**
**daß** die Stirnfläche (6) mit der Mittelachse (5) des Werkzeugschaftes (2) einen Winkel von etwa 90° bis 135° einschließt.

3. Dentalmedizinisches Werkzeug nach Anspruch 1 oder 2,
**dadurch gekennzeichnet,**
**daß** die Stirnfläche (6) in der Blickrichtung quer zur Seitenfläche (7) konvex geformt ist.

4. Dentalmedizinisches Werkzeug nach Anspruch 3,
**dadurch gekennzeichnet,**
**daß** die Stirnfläche (6) gerundet ist.

5. Dentalmedizinisches Werkzeug nach Anspruch 4,
**dadurch gekennzeichnet,**
**daß** die Rundung im wesentlichen zylinder- oder kegelabschnittförmig mit gerundeten Ecken ausgebildet ist

6. Dentalmedizinisches Werkzeug nach einem der vorherighen Ansprüche,
**dadurch gekennzeichnet,**
**daß** die Stirnfläche (6) mit einer Rundung in die Seitenfläche (7) übergeht.

7. Dentalmedizinisches Werkzeug nach einem der vorherigen Ansprüche,
**dadurch gekennzeichnet,**
**daß** der Arbeitsflächenabschnitt (11) mit der Längsachse (5) des Werkzeugschafts (2) einen zum Werkzeugschaft (2) hin offenen Winkel (W3) einschließt, der größer ist, als der Winkel (W2), der zwischen der Längsachse (5) und dem der Seitenfläche (7) nahen Bereich (9) der Stirnfläche (6) eingeschlossen ist.

8. Dentalmedizinisches Werkzeug nach einem der vorherigen Ansprüche,
**dadurch gekennzeichnet,**
**daß** die Seitenfläche (7) mit der Längsachse (5) des Werkzeugschafts (2) einen spitzen Winkel (W) einschließt oder parallel zur Mittelachse (5) verläuft.

9. Dentalmedizinisches Werkzeug nach einem der vorherigen Ansprüche,
**dadurch gekennzeichnet,**
**daß** die Seitenfläche (7) - in der Längsrichtung der Mittelachse (5) des Werkzeugschafts (2) gesehen - konkav gerundet ist.

10. Dentalmedizinisches Werkzeug nach einem der vorherigen Ansprüche,
**dadurch gekennzeichnet,**
**daß** es im Bereich seines Werkzeugschaftes (2) ein Dämpfungsmittel (41) aufweist, das in axialer und/oder lateraler Wirkrichtung wirksam ist

11. Dentalmedizinisches Werkzeug nach Anspruch 10,
**dadurch gekennzeichnet,**
**daß** das Dämpfungsmittel (41) im Übergangsbereich zwischen dem Werkzeugschaft (2) und dem Bearbeitungsabschnitt (3) angeordnet ist.

12. Dentalmedizinisches Werkzeug nach Anspruch 10 oder 11,
**dadurch gekennzeichnet,**
**daß** das Dämpfungsmittel (41) durch ein Zwischenglied (42) aus elastisch verformbaren Material, insbesondere Kunststoff oder Gummi, gebildet ist.

13. Dentalmedizinisches Werkzeug nach einem der vorherigen Ansprüche,
**dadurch gekennzeichnet,**
**daß** im Bereich des Werkzeugschaftes (2), vorzugsweise im Übergangsbereich zwischen dem Werkzeugschaft (2) und dem Bearbeitungsabschnitt (3), ein Gelenk (45) angeordnet ist.

14. Dentalmedizinisches Werkzeug nach Anspruch 13,
**dadurch gekennzeichnet,**
**daß** das Gelenk durch das Dämpfüngsmittel (41) gebildet ist.

15. Dentalmedizinisches Werkzeug nach Anspruch 13 oder 14,
**dadurch gekennzeichnet, daß** das Gelenk (45) durch ein Zwischenglied (42) aus elastisch verformbarem Material, z.B. Kunststoff oder Gummi, gebildet ist, das zwischen zwei Werkzeugschaftteilen oder zwischen dem Werkzeugschaft (2) und dem Bearbeitungsabschnitt (3) angeordnet und mit diesen Teilen fest verbunden ist, z.B. durch Kleben.

16. Dentalmedizinisches Werkzeug nach einer der vorherigen Ansprüche,
**dadurch gekennzeichnet,**
**daß** das Werkzeug (1) zwischen seinem Werkzeugschaft (2) und seinem Bearbeitungsabschnitt (3) ein Drehgelenk (27) aufweist, in dem der Bearbeitungsabschnitt (3) um die Mittelachse (5) drehbar gelagert ist.

17. Dentalmedizinisches Werkzeug nach Anspruch 16,
**dadurch gekennzeichnet,**
**daß** das Drehgelenk (27) durch einen Gelenkzapfen (28) und ein ihn aufnehmendes Gelenkloch (29) gebildet ist.

18. Dentalmedizinisches Werkzeug, insbesondere nach Anspruch 17.
**dadurch gekennzeichnet,**
**daß** der Gelenkzapfen (28) im Gelenkloch (29) durch eine manuell überdrückbare Verrastungsvorrichtung (20) lösbar verrastbar ist.

19. Dentalmedizinisches Werkzeug nach einem der vorherigen Ansprüche 10 bis 17,
**dadurch gekennzeichnet,**
**daß** das Dämpfungsmittel (41) in das Drehgelenk (27) integriert ist.

20. Dentalmedizinisches Werkzeug nach Anspruch 19,
**dadurch gekennzeichnet,**
**daß** das Dämpfungsmittel (41) durch eine Hülse (42) zwischen dem Gelenkzapfen (28) und dem Gelenkloch (29) und/oder durch einen Körper oder eine Scheibe (43) axial zwischen dem Gelenkzapfen (28) und dem Grund des Gelenklochs (29) gebildet ist, die jeweils aus elastischem Material bestehen.

21. Dentalmedizinisches Werkzeug nach einem der Ansprüche 16 bis 20,
**dadurch gekennzeichnet,**
**daß** dem Drehgelenk (27) eine Feststellvorrichtung (51) zugeordnet ist, mit der die Drehbarkeit des Werkzeugs (5) im Drehgelenk (27) sperrbar ist.

22. Dentalmedizinisches Werkzeug nach Anspruch 21,
**dadurch gekennzeichnet,**
**daß** die Feststellvorrichtung (51) durch eine laterale und/oder axiale Bewegung des Werkzeugs (1) in Eingriff bringbar ist und durch eine Bewegung in die umgekehrte Bewegungrichrung lösbar ist.

23. Dentalmedizinisches Werkzeug nach einer der vorherigen Ansprüche,
**dadurch gekennzeichnet,**
**daß** das Werkzeug (1) ein Schwenkgelenk (118) aufweist, in dem das es um eine Schwenkachse oder räumlich um einen Schwenkpunkt pendelnd schwenkbar gelagert ist und jeweils durch eine Rückstellkraft in seiner Mittelstellung beaufschlagt ist.

## Claims

1. Dental-medical tool (1) for the preparation of a tooth (Z) for a tooth crown, consisting of an elongate tool shaft (2), which is connected at its one end with a working section (3) which has an abrasive working surface (10) extending longitudinally of and/or transversely of the middle axis (5) of the tool shaft (2), and the functional range (B) of which extends over a side surface (7) and the end surface (6) of the working section opposite to the tool shaft (2), the side surface (7) being smooth over a longitudinal section or overall and the end surface (6) having an abrasive working surface section (11) only on a region away from the side surface (7).

2. Dental-medical tool according to claim 1,
**characterized in that**,
the end surface (6) includes an angle of about 90° to 135° with the middle axis (5) of the tool shaft (2).

3. Dental-medical tool according to claim 1 or 2,
**characterized in that**,
the end surface (6), in the direction of view transverse to the side surface (7), is convexly shaped.

4. Dental-medical tool according to claim 3,
**characterized in that**,
the end surface (6) is rounded.

5. Dental-medical tool according to claim 4,
**characterized in that**,
the rounding is formed in substance in a cylindrical or conical section shape with rounded corners.

6. Dental-medical tool according to any preceding claim,
**characterized in that**,
the end surface (6) transitions with a rounding into the side surface (7).

7. Dental-medical tool according to any preceding claim,
**characterized in that**,
the working surface section (11) includes with the longitudinal axis (5) of the tool (2) an angle (W3) open towards the tool shaft (2), which angle is greater than the angle (W2) which is included between the longitudinal axis (5) and the region (9) of the end surface (6) which neighbours the side surface (7).

8. Dental-medical tool according to any preceding claim,
**characterized in that**,
the side surface (7) includes with the longitudinal axis (5) of the tool (2) an acute angle (W) or runs parallel to the middle axis (5).

9. Dental-medical tool according to any preceding claim,
**characterized in that**,
the side surface (7) - seen in the longitudinal direction of the middle axis (5) of the tool shaft (2) - is concavely rounded.

10. Dental-medical tool according to any preceding claim,
**characterized in that**,
it has in the region of its tool shaft (2) a damping means (41) which is effective in axial and/or lateral direction of action.

11. Dental-medical tool according to claim 10,
**characterized in that**,
the damping means (41) is arranged in the transition region between the tool shaft (2) and the working section (3).

12. Dental-medical tool according to claim 10 or 11,
**characterized in that**,
the damping means (41) is formed by an intermediate member (42) of elastically deformable material, in particular plastics or rubber.

13. Dental-medical tool according to any preceding claim,
**characterized in that**,
in the region of the tool shaft (2), preferably in the transition region between the tool shaft (2) and the working section (3), there is arranged a joint (45).

14. Dental-medical tool according to claim 13,
**characterized in that**,
the joint is formed by means of the damping means (41).

15. Dental-medical tool according to claim 13 or 14,
**characterized in that**,
the joint (45) is formed by means of an intermediate member (42) of elastically deformable material, e.g. plastics or rubber, which is arranged between two tool shaft parts or between the tool shaft (2) and the working section (3) and is fixedly connected with these parts, e.g. by gluing.

16. Dental-medical tool according to any preceding claim,
**characterized in that**,
the tool (1) has a rotary joint (27) between its tool shaft (2) and its working section (3), in which joint the working section (3) is mounted to be rotatable about the middle axis (5).

17. Dental-medical tool according to claim 16,
**characterized in that**,
the rotary joint (27) is formed by means of a joint pin (28) and a joint aperture (29) receiving it.

18. Dental-medical tool in particular according to claim 17,
**characterized in that**,
the joint pin (28) is releasably latched in the joint aperture (29) by means of a latching device (20) which can be manually overcome.

19. Dental-medical tool according to any of preceding claims 10 to 17,
**characterized in that**,
the damping means (41) is integrated into the rotary joint (27).

20. Dental-medical tool according to claim 19,
**characterized in that**,
the damping means (41) is formed by means of a sleeve (42) between the joint pin (28) and the joint aperture (29) and/or by means of a body or a disk (43) axially between the joint pin (28) and the bottom of the joint aperture (29), which in each case are of elastic material.

21. Dental-medical tool according to any of claims 16 to 20,
**characterized in that**,
there is associated with the rotary joint (27) a fixing device (51) with which the rotatability of the tool (5) in the rotary joint (27) can be blocked.

22. Dental-medical tool according to claim 21,
**characterized in that**,
the fixing device (51) can brought into engagement by means of a lateral and/or axial movement of the tool (1) and is releasable by means of a movement in the opposite movement direction.

23. Dental-medical tool according to any preceding claim,
**characterized in that**,
the tool (1) has a pivot joint (118) in which it is pivotably mounted to swing around a pivot axis or three-dimensionally around a pivot point and it is acted on into its middle position by means of a return force.

## Revendications

1. Outil dentaire (1) destiné à préparer une dent (Z) pour une couronne dentaire, constitué d'une tige allongée (2) reliée, par l'une de ses extrémités, à une région de façonnage (3) présentant une surface abrasive de travail (10) s'étendant longitudinalement et/ou transversalement par rapport à l'axe médian (5) de la tige (2) de l'outil ; et dont la zone opérante (B) s'étend sur une surface latérale (7) et sur la face frontale (6) de la région de façonnage (3), située en vis-à-vis de ladite tige (2) de l'outil, sachant que la surface latérale (7) est lisse en totalité ou sur un segment longitudinal, et que la face frontale (6) comporte un tronçon (11) de surface abrasive de travail uniquement sur une zone tournée à l'opposé de ladite surface latérale (7).

2. Outil dentaire selon la revendication 1,
**caractérisé par le fait**
**que** la face frontale (6) décrit un angle d'environ 90° à 135° avec l'axe médian (5) de la tige (2) dudit outil.

3. Outil dentaire selon la revendication 1 ou 2,
**caractérisé par le fait**
**que** la face frontale (6) est de forme convexe observée transversalement par rapport à la surface latérale (7).

4. Outil dentaire selon la revendication 3,
**caractérisé par le fait**
**que** la face frontale (6) est arrondie.

5. Outil dentaire selon la revendication 4,
**caractérisé par le fait**
**que** l'arrondi est réalisé pour l'essentiel en forme de segment cylindrique ou conique, avec des coins arrondis.

6. Outil dentaire selon l'une des revendications précédentes,
**caractérisé par le fait**
**que** la face frontale (6) fusionne dans la surface latérale (7) par un arrondi.

7. Outil dentaire selon l'une des revendications précédentes,
**caractérisé par le fait**
**que** le tronçon (11) de surface de travail décrit, avec l'axe longitudinal (5) de la tige (2) dudit outil, un angle (W3) qui est ouvert en direction de ladite tige (2) de l'outil, et est supérieur à l'angle (W2) situé entre ledit axe longitudinal (5) et la zone (9) de la face frontale (6) qui est rapprochée de la surface latérale (7).

8. Outil dentaire selon l'une des revendications précédentes,
**caractérisé par le fait**
**que** la surface latérale (7) décrit un angle aigu (W) avec l'axe longitudinal (5) de la tige (2) de l'outil, ou s'étend parallèlement à l'axe médian (5).

9. Outil dentaire selon l'une des revendications précédentes,
**caractérisé par le fait**
**que** la surface latérale (7) offre un arrondi concave - observée dans la direction longitudinale de l'axe médian (5) de la tige (2) de l'outil -.

10. Outil dentaire selon l'une des revendications précédentes,
**caractérisé par le fait**
**qu'**il présente, dans la région de sa tige (2), un moyen d'amortissement (41) dont la direction d'action est axiale et/ou latérale.

11. Outil dentaire selon la revendication 10,
**caractérisé par le fait**
**que** le moyen d'amortissement (41) se trouve dans la zone de transition entre la région de façonnage (3) et la tige (2) dudit outil.

12. Outil dentaire selon la revendication 10 ou 11,
**caractérisé par le fait**
**que** le moyen d'amortissement (41) est formé d'un organe intercalaire (42) en un matériau élastiquement déformable, notamment une matière plastique ou du caoutchouc.

13. Outil dentaire selon l'une des revendications précédentes,
**caractérisé par le fait**
**qu'**une articulation (45) est disposée dans la zone de la tige (2) dudit outil, de préférence dans la zone de transition entre la région de façonnage (3) et ladite tige (2) de l'outil.

14. Outil dentaire selon la revendication 13,
**caractérisé par le fait**
**que** l'articulation est matérialisée par le moyen d'amortissement (41).

15. Outil dentaire selon la revendication 13 ou 14,
**caractérisé par le fait**
**que** l'articulation (45) est formée d'un organe intercalaire (42) en un matériau élastiquement déformable, par exemple une matière plastique ou du caoutchouc, qui est interposé entre deux parties de la tige de l'outil, ou entre ladite tige (2) de l'outil et la région de façonnage (3), et est relié rigidement à ces pièces, par exemple par collage.

16. Outil dentaire selon l'une des revendications précédentes,
**caractérisé par le fait**
**que** ledit outil (1) présente, entre sa tige (2) et sa région de façonnage (3), une articulation tournante (27) dans laquelle ladite région de façonnage (3) est montée à rotation autour de l'axe médian (5).

17. Outil dentaire selon la revendication 16,
**caractérisé par le fait**
**que** l'articulation tournante (27) est formée par un tenon d'articulation (28) et par un trou d'articulation (29) recevant ce dernier.

18. Outil dentaire, notamment selon la revendication 17,
**caractérisé par le fait**
**que** le tenon d'articulation (28) peut être encliqueté amoviblement, dans le trou d'articulation (29), par l'intermédiaire d'un dispositif d'encliquetage (20) dont l'action peut être surmontée manuellement.

19. Outil dentaire selon l'une des revendications précédentes 10 à 17,
**caractérisé par le fait**
**que** le moyen d'amortissement (41) est intégré dans l'articulation tournante (27).

20. Outil dentaire selon la revendication 19,
**caractérisé par le fait**
**que** le moyen d'amortissement (41) est formé d'une douille (42) entre le tenon d'articulation (28) et le trou d'articulation (29), et/ou d'un corps ou d'un disque (43) interposé axialement entre ledit tenon d'articulation (28) et le fond dudit trou d'articulation (29), ces éléments étant respectivement constitués d'un matériau élastique.

21. Outil dentaire selon l'une des revendications 16 à 20,
**caractérisé par le fait**
**qu'**un dispositif (51) de consignation à demeure, par lequel la faculté de rotation dudit outil (5) dans l'articulation tournante (27) peut être condamnée, est affecté à ladite articulation tournante (27).

22. Outil dentaire selon la revendication 21,
**caractérisé par le fait**
**que** le dispositif (51) de consignation à demeure peut être mis en prise par un mouvement latéral et/ou axial dudit outil (1), et peut être libéré par un mouvement s'opérant dans la direction opposée.

23. Outil dentaire selon l'une des revendications précédentes,
**caractérisé par le fait**
**que** ledit outil (1) présente une articulation pivotante (118) dans laquelle il est monté à pivotement oscillant autour d'un axe de pivotement, ou dans l'espace autour d'un point de pivotement, et est respectivement sollicité vers sa position médiane, par une force de rappel.
